# DEMANDE DE BREVET EUROPEEN

(11) **EP 0 753 689 A1**
(43) Date de publication de la demande: **15.01.1997**
(21) Numéro de dépôt: 96420232.9
(22) Date de dépôt: 05.07.1996
(51) Int. Cl.: F16J 15/08, F16J 15/12

(54) **Joint pour moteur à combustion interne, notamment joint de culasse**

(30) Priorité: 11.07.1995 FR 9508629
(71) Demandeur: CURTY PAYEN S.A., F-69800 Saint-Priest, Rhône (FR)
(72) Inventeur: Jargeaix, Gérard, 69003 Lyon (FR)
(74) Mandataire: Maureau, Philippe

(57) **Abrégé**

Joint du type comprenant un corps plat (28) dans lequel sont ménagées des ouvertures pour les chambres de combustion, pour les passages de liquide de lubrification et de liquide de refroidissement du moteur, ainsi que des ouvertures pour le passage des goujons de fixation de la culasse sur le bloc moteur, les ouvertures pour les chambres de combustion étant bordées chacune par un élément d'étanchéité appelé anneau de feu.

Selon l'invention chaque anneau de feu (24) comporte un talon (25) situé sur son bord extérieur et s'étendant sur au moins une partie de sa périphérie, fixé sur le corps du joint (28) avec possibilité de déplacement de l'anneau de feu (24) perpendiculairement au corps du joint et/ou dans le plan de celui-ci.

## Description

La présente invention a pour objet un joint pour moteur à combustion interne, notamment un joint de culasse.

Un joint de culasse a pour fonction d'assurer l'étanchéité entre le bloc moteur et la culasse, vis-à-vis des chambres de combustion à l'intérieur desquelles sont montés déplaçables les pistons, et vis-à-vis de liquides tels que liquide de lubrification du moteur et liquide de refroidissement de celui-ci.

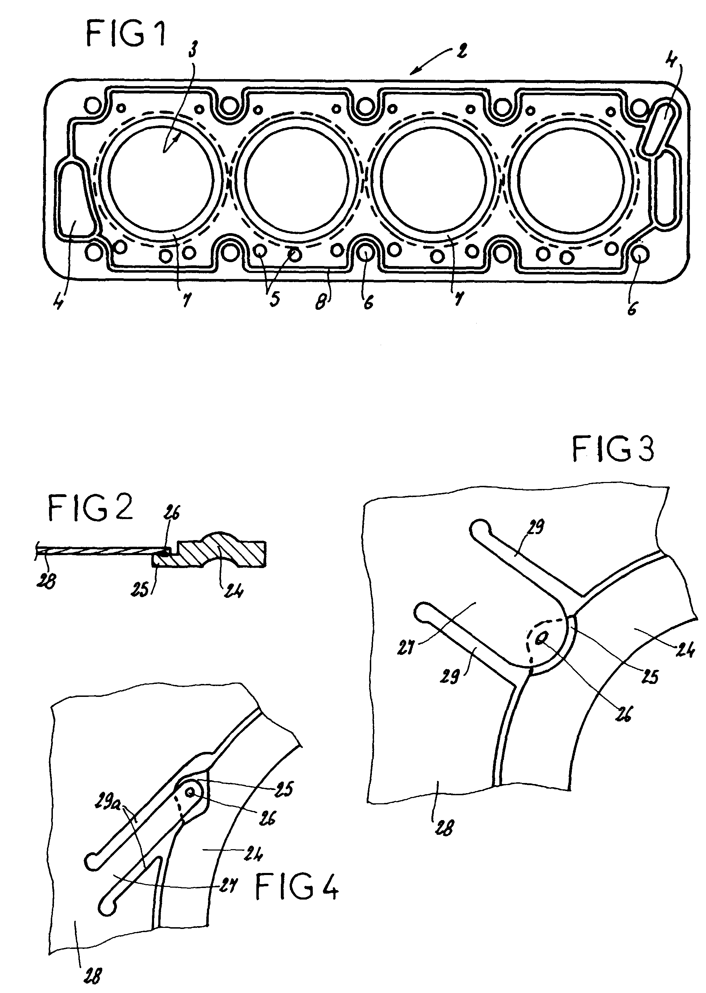

Comme montré à la figure 1, qui est une vue en élévation d'un joint de culasse, celui-ci comprend un corps 2 dans lequel sont ménagées un certain nombre d'ouvertures, telles que celles 3 correspondant aux chambres de combustion, 4 correspondant aux passages de liquide de refroidissement, 5 correspondant aux passages de liquide de lubrification, des ouvertures 6 étant également prévues pour permettre le passage de goujons de serrage de la culasse sur le bloc moteur. L'étanchéité au gaz est réalisée à l'aide d'anneaux de feu 7, qui équipent les ouvertures du joint correspondant aux chambres de combustion. L'étanchéité aux liquides de lubrification et de refroidissement est réalisée par l'intermédiaire de cordons 8, par exemple en élastomère.

Même si les joints de culasse sont réalisés avec grand soin, le centrage de l'anneau de feu par rapport à la chambre de combustion correspondante n'est pas toujours parfait, surtout si l'on tient compte des tolérances de fabrication admises pour les blocs moteurs et les culasses. De plus, l'élévation de température lors du fonctionnement du moteur n'est pas régulière sur toute la surface du joint, de telle sorte qu'il peut intervenir des contraintes parasites dues à des dilatations différentielles en différents emplacements du joint.

Une solution consisterait à désolidariser totalement le corps du joint et les anneaux de feu qui seraient montés indépendamment du joint sur le bloc moteur. Toutefois cette solution n'est pas satisfaisante car elle multiplie le nombre d'opérations avec les risques de pertes éventuelles des éléments constitutifs du joint : le corps d'une part et les anneaux de feu d'autre part.

Le document FR-A-2 446 970 concerne un joint de culasse, dans lequel l'anneau de feu comporte un talon engagé dans une fente du corps du joint, pour permettre un montage flottant de l'anneau de feu. La réalisation est complexe et l'anneau de feu n'est pas solidaire du corps.

Le but de l'invention est de fournir un joint unique, donc simple à monter, tout en assurant une indépendance des différentes parties du joint en période de fonctionnement en permettant le centrage des anneaux de feu vis-à-vis des chambres de combustion, ainsi qu'une latitude de déplacement des anneaux de feu perpendiculairement au plan du joint.

A cet effet, le joint qu'elle concerne, du type comprenant un corps plat dans lequel sont ménagées des ouvertures telles des ouvertures pour les chambres de combustion, pour les passages de liquide de lubrification et de liquide de refroidissement du moteur, ainsi que des ouvertures pour le passage des goujons de fixation de la culasse sur le bloc moteur, les ouvertures pour les chambres de combustion étant bordées chacune par un élément d'étanchéité appelé anneau de feu, est caractérisé en ce que chaque anneau de feu comporte un talon situé sur son bord extérieur et s'étendant sur au moins une partie de sa périphérie, fixé sur le corps du joint avec possibilité de déplacement de l'anneau de feu perpendiculairement au corps du joint et/ou dans le plan de celui-ci.

Ce montage permet de disposer d'un joint se présentant sous une forme unitaire, donc simple à monter, et qui possède des capacités de centrage des anneaux de feu améliorant l'étanchéité aux gaz, et de déplacement des anneaux perpendiculairement au plan du joint permettant un découplage des anneaux relativement au reste du joint, ce qui est avantageux notamment pendant le fonctionnement du moteur car supprimant les contraintes parasites dans le joint et sur son environnement.

Le corps du joint peut être réalisé en une matière et dans une épaisseur différente de celle des anneaux de feu, cette épaisseur étant parfaitement adaptée à la fonction qui consiste dans la réalisation de l'étanchéité au niveau des chambres de combustion. Chaque matériau constitutif du joint, respectivement du corps et des anneaux de feu, peut être choisi indépendamment des autres, ce qui permet une optimisation en fonction des buts recherchés.

Suivant une possibilité chaque anneau de feu est fixé de façon rigide sur une partie du corps de joint, montée de façon souple vis-à-vis du reste du corps de joint.

Selon une première forme d'exécution dans ce cas le talon de chaque anneau de feu s'étend de façon discontinue à la périphérie de l'anneau formant des oreilles dont chacune est fixée de façon rigide sur une languette appartenant au corps du joint et obtenue par des découpes ménagées dans le corps et débouchant dans l'ouverture destinée au montage d'un anneau de feu.

Les découpes assurant la formation de chaque languette, au nombre de deux, peuvent être droites, de largeur constante ou variable, orientées sensiblement radialement à l'ouverture de la chambre de combustion, ou inclinées par rapport à une ligne d'orientation radiale à cette ouverture, les découpes pouvant également former une ligne brisée, ceci en fonction de la forme du joint, et des effets de découplage recherchés entre l'anneau de feu et le corps du joint.

Afin d'adapter la souplesse de la déformation recherchée chaque languette comporte des plis ménagés perpendiculairement à la plaque.

Chaque languette peut ne pas comporter de plis, ou comporter plusieurs plis successifs assurant la formation de nervures.

Conformément à une autre forme d'exécution de ce joint pour moteur à combustion interne, le talon de chaque anneau de feu est fixé sur le corps du joint par un matériau souple et résistant aux conditions de fonctionnement du moteur : température et pression, tel qu'une colle ou une résine.

De toute façon, l'invention sera bien comprise à l'aide de la description qui suit, en référence au dessin schématique annexé, représentant à titre d'exemples non limitatifs, plusieurs formes d'exécution de ce joint pour moteur à combustion interne :
Figure 1 est une vue en élévation d'un joint de culasse ;
Figure 2 est une vue partielle, en coupe et à échelle agrandie d'un premier montage d'un anneau de feu sur un corps de joint ;
Figure 3 est une vue partielle de dessus du joint de figure 2 ;
Figures 4 et 5 sont deux vues similaires à figure 4 représentant deux autres formes d'exécution de joint ;
Figures 6 et 7 représentent deux formes d'exécution de découpes destinées au ménagement de languettes ;
Figures 8, 9 et 10 sont trois vues en coupe longitudinale d'une languette et du talon d'un anneau de feu ;
Figures 11 est une vue en coupe représentant encore une autre solution.

Les différentes formes d'exécution concernant le montage d'un anneau de feu sur le corps d'un joint s'appliquent à un joint de culasse tel que représenté à la figure 1 et défini précédemment, étant précisé que la forme de ce joint de culasse ainsi que le nombre de chambres de combustion ne sont absolument pas limitatifs.

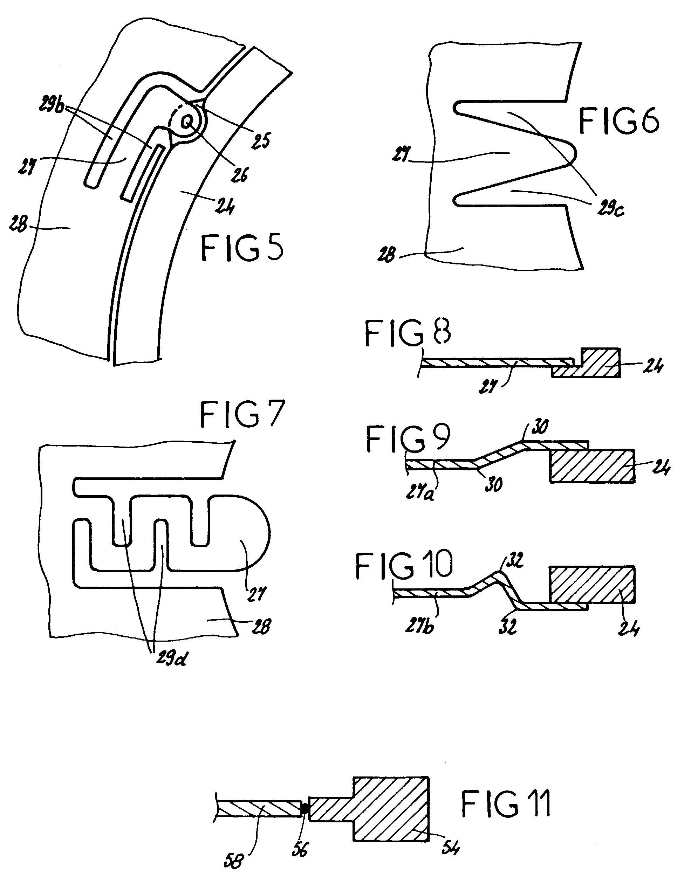

Dans la forme d'exécution représentée aux figures 2 et 3, un anneau de feu 24 comporte des oreilles 25 réparties sur sa périphérie, fixées chacune par soudage par exemple en 26, sur une languette 27 ménagée dans le corps 28 du joint et délimitées par deux découpes 29. Dans la forme d'exécution représentée à la figure 4, les deux découpes 29 sont droites, de largeur constante, parallèles et orientées sensiblement radialement à la chambre de combustion.

Il est ainsi possible d'obtenir un montage flottant de l'anneau 24 vis-à-vis du corps 28, dans la mesure où l'anneau peut se déplacer perpendiculairement au corps grâce à la délimitation de la languette 27 par deux découpes 29, qui procurent à la languette une capacité de déformation.

Dans la forme d'exécution représentée à la figure 4, dans laquelle les mêmes éléments sont désignés par les mêmes références que précédemment, les deux découpes 29a sont inclinées.

Dans la forme d'exécution représentée à la figure 5, les deux découpes 29b comportent une première partie orientée sensiblement périphériquement à l'anneau de feu et une seconde partie débouchant dans l'ouverture, orientée de façon sensiblement radiale.

Dans la forme d'exécution représentée à la figure 6, les deux découpes 29c sont orientées sensiblement radialement, mais de largeur augmentant en direction de l'ouverture de la chambre de combustion.

Dans la forme d'exécution représentée à la figure 7, les deux découpes 29d présentent la forme de lignes brisées.

La figure 8 représente une forme d'exécution dans laquelle la languette 27 est plane. Dans la forme d'exécution représentée à la figure 9, la languette 27a présente deux plis 30, et dans la forme d'exécution représentée à la figure 10, la languette 27b comporte trois plis successifs 32.

La présence de ces plis, leur nombre et la valeur de ceux-ci permettent de moduler la souplesse du montage de l'anneau de feu vis-à-vis du corps du joint.

Dans la forme d'exécution représentée à la figure 11, un anneau de feu 54 est fixé sur le corps du joint 58 par l'intermédiaire d'un élément 56 en matériau souple et résistant aux conditions de fonctionnement du moteur : température et pression, tel qu'une colle, une résine, ou un polymère.

Comme il ressort de ce qui précède, l'invention apporte une grande amélioration à la technique existante en fournissant un joint de culasse pour moteur à combustion interne, de structure simple, dans lequel sont obtenus le centrage de l'étanchéité au gaz et une liberté de déplacement de chaque anneau.

Comme il va de soi, l'invention ne se limite pas aux seules formes d'exécution de ce joint de culasse, décrites ci-dessus à titres d'exemples ; elle en embrasse, au contraire, toutes les variantes de réalisation. C'est ainsi, notamment, que dans les différentes formes d'exécution l'anneau de feu a été représenté plus épais que le corps du joint. Toutefois ces épaisseurs pourraient être inversées. Le talon de l'anneau de feu a aussi été représenté comme s'étendant de façon discontinue à la périphérie de l'anneau de feu. Cependant ce talon pourrait s'étendre de façon continue.

Bien entendu, certaines des caractéristiques définies dans le cadre d'une forme d'exécution pourraient être combinées différemment, en fonction des besoins, sans que l'on sorte pour autant du cadre de l'invention.

L'invention peut aussi s'appliquer à un joint de culasse comportant un nombre différent d'ouvertures, par exemple un joint pour un seul cylindre, ou bien un joint sans ouverture pour le passage de liquide de refroidissement ou sans ouverture pour le passage de goujons de serrage. De même, l'invention peut s'appliquer à un joint de collecteur, qui peut être un joint du type comportant plusieurs ouvertures, dont certaines sont munies d'un anneau de feu.

## Revendications

1. Joint pour moteur à combustion interne, notamment joint de culasse, du type comprenant un corps plat (10,12,38,48,58) dans lequel sont ménagées des ouvertures telles des ouvertures pour les chambres de combustion, pour les passages de liquide de lubrification et de liquide de refroidissement du moteur, ainsi que des ouvertures pour le passage des goujons de fixation de la culasse sur le bloc moteur, les ouvertures pour les chambres de combustion étant bordées chacune par un élément d'étanchéité appelé anneau de feu, caractérisé en ce chaque anneau de feu (24) comporte un talon (25) situé sur son bord extérieur et s'étendant sur au moins une partie de sa périphérie, fixé sur le corps du joint (28) avec possibilité de déplacement de l'anneau de feu (24) perpendiculairement au corps du joint et/ou dans le plan de celui-ci.

2. Joint pour moteur à combustion interne selon la revendication 1, caractérisé en ce que chaque anneau de feu est fixé de façon rigide sur une partie du corps de joint, montée de façon souple vis-à-vis du reste du corps de joint.

3. Joint pour moteur à combustion interne selon la revendication 2, caractérisé en ce que le talon de chaque anneau de feu (24) s'étend de façon discontinue à la périphérie de l'anneau, formant des oreilles (25) dont chacune est fixée de façon rigide sur une languette (27) appartenant au corps de joint (28), et obtenue par des découpes (29) ménagées dans le corps et débouchant dans l'ouverture destinée au montage d'un anneau de feu.

4. Joint pour moteur à combustion interne selon la revendication 3, caractérisé en ce que les découpes (29,29c) assurant la formation de chaque languette (27) sont droites, au nombre de deux, et orientées sensiblement radialement.

5. Joint pour moteur à combustion interne selon la revendication 3, caractérisé en ce que les découpes (29a) assurant la formation de chaque languette (27) sont droites, au nombre de deux, et sont inclinées par rapport à une ligne d'orientation radiale.

6. Joint pour moteur à combustion interne selon la revendication 3, caractérisé en ce que les découpes (29b,29d) assurant la formation de chaque languette (27) forment une ligne brisée.

7. Joint pour moteur à combustion interne selon l'une quelconque des revendications 3 à 6, caractérisé en ce que chaque languette (27a,27b) comporte des plis (30,32) ménagés perpendiculairement à la plaque.

8. Joint pour moteur à combustion interne selon la revendication 1, caractérisé en ce que le talon de chaque anneau de feu (54) est fixé sur le corps du joint (58) par un matériau souple (56) et résistant aux conditions de fonctionnement du moteur : température et pression, tel qu'une colle ou une résine.
